(19) Europäisches Patentamt
European Patent Office
Office européen des brevets

(11) Numéro de publication: **0 340 086 A1**

(12) # DEMANDE DE BREVET EUROPEEN

(21) Numéro de dépôt: **89401127.9**

(51) Int. Cl.⁴: **C 09 K 11/01**

(22) Date de dépôt: **21.04.89**

(30) Priorité: **29.04.88 FR 8805793**

(43) Date de publication de la demande: **02.11.89 Bulletin 89/44**

(84) Etats contractants désignés: **DE ES GB IT NL**

(71) Demandeur: **VIDEOCOLOR**
**7, boulevard Romain-Rolland**
**F-92128 Montrouge (FR)**

(72) Inventeur: **Patel, Himanshu**
**THOMSON-CSF SCPI**
**F-92045 Paris La Défense Cédex 67 (FR)**

**Pezzulo, Antimo**
**THOMSON-CSF SCPI**
**F-92045 Paris La Défense Cédex 67 (FR)**

(74) Mandataire: **Chaverneff, Vladimir et al**
**THOMSON-CSF SCPI**
**F-92045 PARIS LA DEFENSE CEDEX 67 (FR)**

(54) **Procédé de récupération en phosphores non broyés de tubes cathodiques trichromes.**

(57) Selon la présente invention, pour pouvoir récupérer le maximum de phosphores recueillis dans les développeurs ou les cuves à eau lors de la fabrication de dalles de tubes de télévision en couleurs, on rompt les chaînes de polymères organiques à l'aide d'un oxydant tel que l'acide periodique, et on procède à un lavage au NaOCl pour éliminer les polluants minéraux tels que Cr, Zn, Cd.

FIG. 6

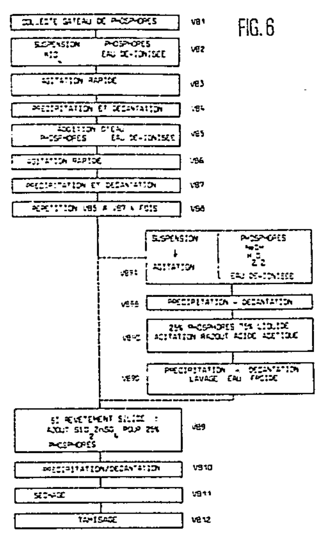

EP 0 340 086 A1

**Description**

**PROCEDE DE RECUPERATION DE PHOSPHORES NON BROYES DE TUBES CATHODIQUES TRICHROMES.**

La présente invention se rapporte à un procédé de récupération de phosphores non broyés de tubes cathodiques trichromes.

Les phosphores utilisés habituellement pour réaliser les écrans de tubes cathodiques trichromes ont les compositions suivantes :

- Phosphores verts : ZnS ou Zn, Cd et S avec un activant tel que Cu ou Al. Ils ne comportent ni pigments ni revêtement filtrant, mais un revêtement extérieur comportant de 0 à 0,8 % de silice.
- Phosphores bleus : ZnS avec un activant à l'argent. Ils comportent des pigments ou un revêtement filtrant en $CoAl_2O_4$ dans une proportion de 1,0 à 4,0 %, et un revêtement extérieur en latex dans une proportion de 0,05 à 0,5 % et en silice dans une proportion de 0 à 0,8 %.
- Phosphores rouges : $Y_2O_2S$ avec un activant à l'europium. Ils ont des pigments ou un revêtement filtrant en $Fe_2O_3$ dans une proportion de 0,1 à 0,5 %. Leur revêtement extérieur comporte du latex dans une proportion de 0,05 à 0,5 % et de la silice dans une proportion de 0 à 0,8 %.

Pour réaliser le revêtement en phosphores de la dalle d'un tube cathodique trichrome on a la plupart du temps recours à la méthode de la bouillie. Les phosphores en excès sont normalement recueillis dans une centrifugeuse à partir de révélateurs et de cuves contenant de l'eau. Ces phosphores recueillis contiennent habituellement des polluants organiques, en particulier de l'alcool polyvinylique. La teneur de ces polluants organiques a de 0,05 à 1,0 %. Ces phosphores contiennent également des polluants minéraux, en particulier du chrome, du zinc et du cadmium dans des proportions de 0,001 à 0,2 %.

La présente invention a pour objet un procédé simple et peu onéreux de récupération de ces phosphores sans perdre les avantages liés à leur état dispersé, de façon à pouvoir les réutiliser ultérieurement sans les broyer, et de façon à leur éviter toute perte d'efficacité. Le procédé de l'invention doit également permettre d'éliminer les polluants organiques de ces phosphores recueillis sans avoir à les cuire, pour éviter les pertes d'efficacité dues au processus de cuisson.

Le procédé de l'invention consiste à recueillir les boues de phosphores dans les bacs de développement et dans les cuves à eau, et à les purifier par un simple lavage chimique au lieu de les cuire, pour en éliminer les polluants organiques tels que l'alcool polyvinylique. De préférence, on effectue le lavage chimique des boues de phosphores à l'aide de periodates tels que l'acide periodique. De façon avantageuse, le lavage chimique aux periodates est suivi d'un lavage à l'hypochlorure de sodium ou à l'eau oxygénée avec de l'hydroxyde de sodium pour éliminer les polluants minéraux.

La présente invention sera mieux comprise à l'aide de la description détaillée d'un mode de mise en oeuvre de l'invention illustré par le dessin annexé sur lequel :

- la figure 1 est une vue en coupe longitudinale d'un tube cathodique trichrome;
- la figure 2 est une vue partielle en coupe de la dalle du tube de la figure ;
- les figures 3 et 4 sont des organigrammes de procédés de l'art antérieur pour la récupération des phosphores rouges, et bleus et verts respectivement ; et
- les figures 5 et 6 sont des organigrammes du procédé conforme à l'invention.

Sur la figure 1 on a représenté schématiquement un tube de télévision trichrome de structure conventionnelle. Ce tube comporte une enveloppe 1 constituée d'une dalle frontale en un matériau transparent 2, d'un col 3 et d'une partie évasée 4 interconnectant le col 3 et la dalle frontale 2. Un écran luminescent 5 est réalisé sur la surface interne de la dalle frontale 2. Trois canons à électrons 6, 7 et 8 sont montés dans le col 3 pour émettre trois faisceaux d'électrons individuels qui sont chacun contrôlés par les signaux vidéo représentatifs des couleurs verte, bleue et rouge respectivement. Des dispositifs magnétiques 9 sont prévus de manière connue autour du col pour réaliser notamment la convergence et la déviation des faisceaux d'électrons. De plus, un masque perforé 10 est prévu entre les canons à électrons 6, 7 et 8 et l'écran d'affichage, de manière bien connue.

Comme représenté en détail sur la figure 2, l'écran d'affichage 5 comporte sur la dalle 2 un ensemble de lignes ou bandes parallèles 11 à 13 de matériaux luminophores capables d'émettre respectivement les couleurs verte (V), bleue (B), rouge (R). Chaque ligne ou bande 11, 12 et 13 peut émettre une seule couleur. Chaque canon à électrons 6, 7 et 8 est dirigé sur une couleur correspondante de telle sorte que le faisceau d'électrons provenant de chacun des canons n'excite qu'une seule couleur. Lorsque le processus de dépôt, décrit plus en détail ci-dessous, des luminophores de l'écran est terminé, la dalle est maintenue dans un dispositif support approprié pour réaliser le dépôt d'une première sous-couche 14 et d'une seconde sous couche métallique 15 telle qu'une couche d'aluminium. Ce procédé de fabrication étant bien connu en soi ne sera pas décrit plus en détail.

On va maintenant décrire la réalisation des couches de luminophores de l'écran. A cet effet, la dalle 2 est montée sur un dispositif support approprié et une boue d'un matériau de luminophore est appliquée sur cette dalle. La boue comporte notamment le luminophore souhaité, un polymère organique tel de l'alcool polyvinylique, un photosensibilisateur convenable tel que du dichromate d'ammonium, du dichromate de sodium, ou du dichromate de potassium et de l'eau dé-ionisée.

La boue est répartie sur toute la surface de la dalle qui est fixée sur un dispositif de support entraîné en

rotation à vitesse élevée pour éliminer l'excès de boue. Puis la boue est séchée avec des dispositifs de séchage par infrarouge. Le revêtement de boue est ensuite irradié par des rayons lumineux convenables à travers un masque perforé pour enregistrer à chaque fois le dessin des bandes d'une couleur sur la couche de boue séchée. L'irradiation lumineuse amène la boue à polymériser et rend les surfaces irradiées insolubles à l'eau. Les parties de la boue non irradiées sont alors éliminées par un simple lavage de la dalle avec de l'eau. Ce lavage laisse le dessin des bandes du luminophore intact. Le panneau est alors séché pour éliminer l'eau. Cette procédure est recommencée deux fois pour déposer les deux autres bandes de luminophore. La séquence de dépôt normal pour les trois couleurs du luminophore est en général le vert, le bleu et le rouge.

Les phosphores verts ne comportent pas de revêtement filtrant ni ne sont pigmentés. Leur revêtement extérieur est habituellement en silice ou en silicate de zinc. Les phosphores rouges, ainsi que les phosphores bleus, sont pourvus d'un revêtement filtrant ou sont pigmentés respectivement avec des pigments rouges en oxyde de fer ($Fe_2O_3$) et des pigments bleus (aluminate de cobalt) de façon à réduire les réflexions du tube vis-à-vis de la lumière ambiante et d'en augmenter le contraste.

Les pigments ont tendance à se séparer des particules de phosphores pendant les processus habituels de mélange des boues et de revêtement de la dalle. En vue d'empêcher cette séparation, les phosphores bleus et rouges sont pourvus d'un revêtement organique en latex. Pour en améliorer les propriétés d'adhérence, on peut revêtir ces phosphores bleus et rouges de silice.

Les phosphores éliminés dans les développeurs et les cuves à eau sont envoyés, pour chacune des trois couleurs, dans une centrifugeuse, et recueillis sous forme de gâteau humide contenant 0,05 à 1,0 % de polluants organiques, 0,001 à 0,2 % de polluants minéraux, 10 à 20 % d'eau et 80 à 90 % de phosphores. On décrit ci-dessous en référence aux figures 3 et 4 les procédés habituels de récupération des phosphores rouges, et des phosphores verts et bleus respectivement.

Comme illustré en figure 3, on collecte tout d'abord le gâteau de phosphore dans la centrifugeuse et on le cuit à environ 450° pendant huit heures (étape E1).

E2 : on prépare une suspension de phosphores dans de l'eau déionisée à température ambiante, cette suspension comprend 25° de phosphores. Les phosphores sont agités vigoureusement dans un récipient tournant à environ 300 tours . minute, et on leur ajoute de l'hydroxyde de sodium et de l'hypochlorure de sodium. La concentration d'hydroxyde de sodium est maintenue à environ 0,2 à 0,5 % en poids et la concentration en hypochlorure de sodium est maintenue à environ 1 % en poids. La bouillie de phosphores est agitée pendant deux à quatre heures. Au bout de ce temps on arrête l'agitation et les phosphores se déposent et l'on décante le liquide.

E3 : on ajoute de l'eau déionisée pour obtenir une concentration en phosphores d'environ 25 %, pour environ 75 % de liquide. On agite vigoureusement pendant une heure la bouillie de phosphores puis on arrête l'agitation, les phosphores se déposent et le liquide est décanté. On répète cette procédure de rinçage à l'eau déionisée trois à quatre fois.

E4 : on ajoute de l'eau déionisée pour obtenir une concentration en phosphores d'environ 25 % pour environ 75 % de liquide. On agite la bouillie de phosphores vigoureusement et l'on ajoute de l'acide chlorhydrique concentré de façon que la solution soit majoritairement acide au test de pH. On agite la bouillie de phosphores pendant une à deux heures pour dissoudre le zinc libre, puis on stoppe l'agitation, les phosphores se déposent et le liquide est décanté.

E5 : on ajoute de l'eau déionisée pour obtenir une concentration en phosphores d'environ 25 % pour 75 % environ de liquide. On agite vigoureusement la bouillie de phosphores pendant une heure, on arrête l'agitation, les phosphores se déposent et le liquide est décanté. On répète trois à quatre fois cette procédure de rinçage.

E6 : de l'eau déionisée est ajoutée pour obtenir une concentration en phosphores d'environ 25 % pour 75 % environ en liquide. On agite vigoureusement la bouillie de phosphores et l'on ajoute une quantité appropriée de latex qui est précipitée sur les phosphores.

E7 : on arrête l'agitation, les phosphores se déposent et le liquide est décanté. On pourrait également utiliser un revêtement à base de silicate.

E8 : le revêtement de phosphores est desséché dans un four à environ 150° C pendant huit heures.

E9 : on tamise les phosphores dans un tamis à maille de 100 à 500 environ pour éliminer les agrégats.

E 10 : les phosphores sont broyés dans un broyeur à billes pendant 1/2 à 8 heures, ce broyeur contenant un milieu composé d'eau et d'alcool polyvinylique (APV). On forme une bouillie de phosphores en ajoutant des quantités appropriées d'alcool polyvinylique, de dichromate et de solutions d'agents actifs de surface (surfactants).

En référence à la figure 4 on va décrire ci-dessous le procédé de récupération de l'art antérieur pour les phosphores verts et bleus.

Les étapes E'1 à E'3 sont les mêmes que les étapes E1 à E3 pour les phosphores rouges, à la seule exception que l'on effectue le lavage avec 1,0 % d'hydroxyde de sodium et 2 % de persulfate d'ammonium.

E'4 : on ajoute de l'eau déionisée pour obtenir une concentration en phosphores d'environ 25 % pour environ 75 % de liquide. On agite vigoureusement la bouillie de phosphores et l'on ajoute la quantité nécessaire de latex pour le bleu et une solution à base de silicate pour le vert.

E'5 : après précipitation du revêtement approprié, on arrête l'agitation, les phosphores se déposent et le liquide est décanté.

E'6 : on recueille les phosphores et on les dessèche dans un four porté à environ 150° pendant huit heures.

E'7 : on tamise les phosphores à l'aide d'un tamis à mailles à 100 à 500 environ.

E'8 : on broie les phosphores dans un broyeur à billes pendant 1/2 à 8 heures, ce broyeur contenant un milieu composé d'eau et d'alcool polyvinylique (APV). On forme une bouillie de phosphores en ajoutant des quantités appropriées d'alcool polyvinylique, de dichromate et de solutions d'agents actifs de surface (surfactants).

On va maintenant décrire ci-dessous en référence aux figures 5 et 6 le procédé conforme à l'invention pour recycler des phosphores prélevés dans les développeurs et les cuves à eau. Ce procédé ne fait plus appel à l'étape de cuisson à haute température pour éliminer les polluants organiques. Grâce à ce procédé, les phosphores restent à l'état dispersé dans la bouillie, ce qui permet de se passer du broyage dans un broyeur à billes, et de ne plus recourir à des procédés de dispersion par ultrasons ou agitation à grande vitesse pour reconstituer la bouillie de phosphores.

On va maintenant expliquer en détail, en référence à la figure 5, le procédé de l'invention pour la récupération des phosphores rouges :

R1 : On recueille les phosphores rouges dans la centrifugeuse.

R2 : Les phosphores sont mis en suspension dans une solution de $KI0_4$ ou $HI0_4$ dans de l'eau déionisée. La concentration approximative de la solution est de 25 % en phosphores, 0,1 à 1 % en $KI0_4$ ou $HI0_4$ et de l'eau déionisée.

R3 : On agite vigoureusement la suspension de phosphores à une température comprise entre 50 et 100° C environ pendant au moins 10 heures.

R4 : On arrête l'agitation, les phosphores précipitent et l'eau est décantée.

R5 : On ajoute de l'eau déionisée pour obtenir une proportion de 25 % environ de phosphores pour 75 % de liquide.

R6 : On agite vigoureusement la bouillie de phosphores pendant au moins 1/2 heure à une température comprise entre 50 et 100° C.

R7 : On arrête l'agitation, les phosphores précipitent et le liquide est décanté.

R8 : On répète quatre fois les étapes R5 à R7.

R9 : Cette étape optionnelle n'est mise en oeuvre que si l'on désire pourvoir les phosphores d'un revêtement extérieur en silice. On agite une bouillie composée de 25 % de phosphores et 75 % d'eau déionisée, et on lui ajoute 0,1 à 1 % (en poids) de silice ($SiO_2$). Puis on ajoute 0,1 à 1 % (en poids) d'une solution de $ZnS0_4$-$7H_20$ à la bouillie de phosphores, et on amène son pH à une valeur comprise entre 6 et 8 en lui ajoutant une solution de $NH_40H$ ou de Na0H. Ensuite, on tamise la bouillie de phosphores à travers un tamis à mailles de 400 à 500.

R10 : On arrête l'agitation, les phosphores précipitent, et le liquide est décanté.

R11 : On recueille les phosphores et on les sèche à une température comprise entre 100 et 200° C pendant au moins 5 heures.

R12 : Les phosphores séchés sont tamisés à travers un tamis à mailles de 500.

Dans le cas où le gâteau initial de phosphores contient du Cr et/ou du Zn ou Cd en excès, on procède aux étapes R9A à R9D entre les étapes R8 et R9 :

R9A : Les phosphores sont mis en suspension dans une solution d'eau déionisée, de Na0H et de Na0Cl pour obtenir une bouillie ayant la composition suivante : 1 à 5 % de Na0Cl, 0,1 à 2 % de Na0H, 25 % de phosphores et 71 à 74 % et de l'eau déionisée. On agite vigoureusement la bouillie pendant deux heures.

R9B : On arrête l'agitation, les phosphores précipitent et le liquide est décanté. On ajoute de l'eau déionisée froide jusqu'à obtenir 25 % de phosphores et 75 % de liquide, et on agite cette suspension pendant quelques minutes. On arrête l'agitation, les phosphores précipitent et le liquide est décanté. On rajoute de l'eau déionisée froide jusqu'à obtenir une proportion de 25 % de phosphores dans l'eau, et on agite la suspension. On répète ce processus jusqu'à ce que le pH de la bouillie de phosphores descende à 10.

R9C : On ajoute lentement de l'acide chlorhydrique concentré à la bouillie constamment agitée comportant 25 % de phosphores juqu'à ce que son pH arrive à une valeur comprise entre 2 et 5.

R9D : On arrête l'agitation, les phosphores précipitent et le liquide est décanté. On répète les lavages à l'eau froide de l'étape R9B jusqu'à ce que le pH de la bouillie à 25 % de phosphores augmente au-delà de 5.

On va maintenant expliquer en référence à la figure 6 le procédé de l'invention pour la récupération des phosphores bleus ou verts.

VB1 : On recueille dans la centrifugeuse le gâteau de phosphores bleus ou verts.

Les étapes VB2 à VB12 (à l'exception de VB9A à VB9D) sont identiques aux étapes R7 à R12 concernant les phosphores rouges.

Si le gâteau initial de phosphores comporte du chrome en excès, on procède aux étapes VB9A à VB9D entre les étapes VB8 et VB9 :

VB9A : Les phosphores sont mis en suspension dans un mélange d'eau déionisée, de 25 % de phosphores, de 0,1 à 1 % de Na0H et 0,01 à 0,2 % de $H_20_2$, et on agite cette bouillie pendant au moins 1/2 heure à une température comprise entre 50 et 100° C.

VB9B : On arrête l'agitation, les phosphores précipitent et le liquide est décanté.

VB9C : On ajoute de l'eau déionisée pour obtenir 25 0/0 de phosphores pour 75 0/0 de liquide, on agite le mélange et on lui ajoute de l'acide acétique pour obtenir un pH compris entre 3 et 5.

VB9D : On arrête l'agitation, les phosphores précipitent, et le liquide est décanté. On procède à plusieurs lavage à l'eau froide pour augmenter le pH jusqu'à une valeur supérieure à 5.

Les phosphores secs récupérés selon le procédé de l'invention, décrit ci-dessus en référence aux figures 5 et 6, présentent une bonne dispersion dans la bouille, sans nécessiter aucun broyage. On prépare la bouillie comportant 25 0/0 de phosphores, 1 à 5 0/0 d'alcool polyvinylique, 1 à 5 0/0 de bichromate de sodium, et de l'eau déionisée, et une faible proportion de surfactants, en l'agitant ou en la malaxant doucement.

Le procédé de l'invention permet d'obtenir des phosphores à rendement sensiblement aussi bon que celui des phosphores d'origine. On n'observe aucune perte de rendement après trois à quatre recyclages selon le procédé de l'invention, alors que le procédé connu (figures 3 et 4) conduit à une réduction systématique et progressive du rendement des phosphores au fur et à mesure de la répétition des cycles de récupération.

On peut relever deux causes de perte de rendement inhérentes au procédé connu :

1°/ la cuisson à 450°C élimine les polluants organiques, mais propage des polluants minéraux dans les cristaux de phosphores. En outre, à cause de cette cuisson, les polluants organiques laissent de faibles résidus de carbone à la surface des phosphores.

2°/ le broyage répété des phosphores au long des cycles successifs de récupération endommage leur structure cristalline.

Le lavage à l'aide d'un periodate ($KIO_4$ ou $HIO_4$ par exemple ) selon le procédé de l'invention permet d'éliminer les polluants organiques sans nécessiter de cuisson, et permet d'éliminer chimiquement les polluants minéraux avant séchage. Ce lavage décompose sélectivement les chaînes moléculaires de l'alcool polyvinylique en rompant les liaisons de 1-2 glycol, et réduit la viscosité de l'alcool polyvinylique, le rendant ainsi soluble dans l'eau :

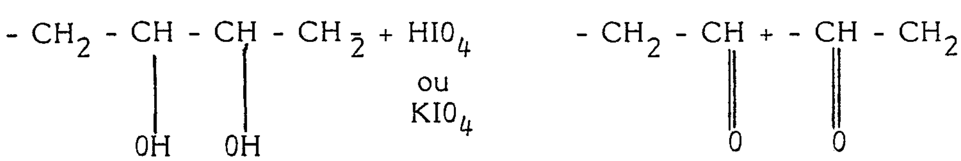


Les revêtements en latex des phosphores bleus et rouges, qui ont pour rôle de retenir leurs pigments, sont habituellement à base de matière acryliques non solubles dans les periodates. Par conséquent, ces revêtements ne sont pas détruits lors des lavages aux periodates.

## Revendications

1. Procédé de récupération de phosphores non broyés de tubes cathodiques trichromes, caractérisé par le fait que l'on élimine les polluants organiques de la bouillie recueillie dans les développeurs et les cuves à eau à l'aide d'un simple lavage chimique, sans processus de cuisson.

2. Procédé selon la revendication 1, caractérisé par le fait que le lavage est effectué avec un periodate.

3. Procédé selon la revendication 2, caractérisé par le fait que le periodate est un acide periodique tel que $KIO_4$, $NaIO_4$ ou $HIO_4$.

4. Procédé selon la revendication 2 ou 3, caractérisé par le fait que le lavage au periodate est suivi d'un lavage au NaOCl ou $H_2O_2$ et NaOH pour éliminer les polluants minéraux.

FIG. 1

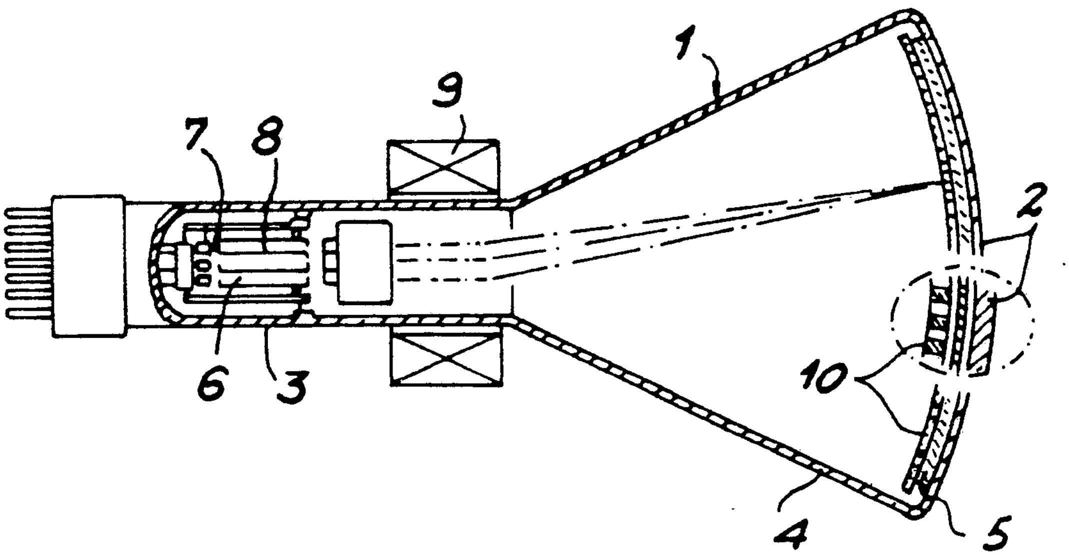


FIG. 2

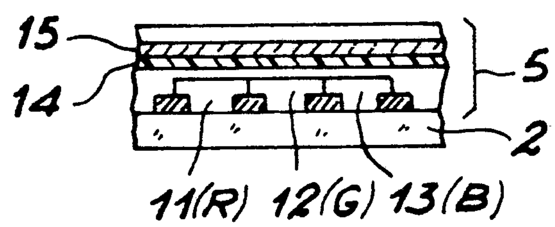

FIG. 3

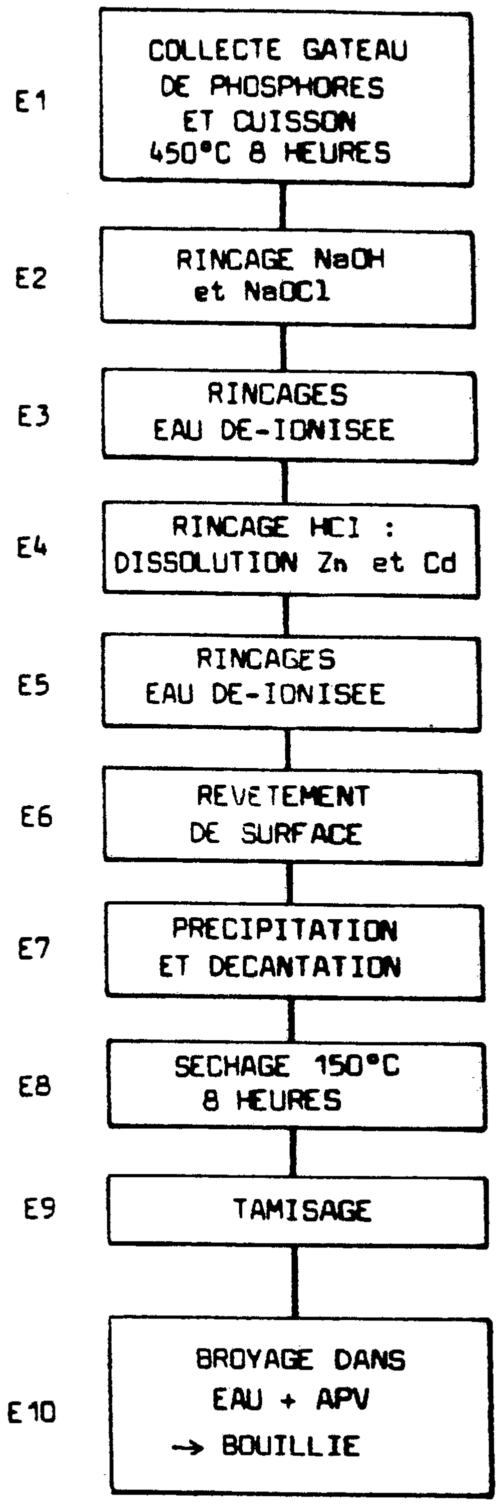
E1
COLLECTE GATEAU DE PHOSPHORES ET CUISSON 450°C 8 HEURES
E2
RINCAGE NaOH et NaOCl
E3
RINCAGES EAU DE-IONISEE
E4
RINCAGE HCl : DISSOLUTION Zn et Cd
E5
RINCAGES EAU DE-IONISEE
E6
REVETEMENT DE SURFACE
E7
PRECIPITATION ET DECANTATION
E8
SECHAGE 150°C 8 HEURES
E9
TAMISAGE
E10
BROYAGE DANS EAU + APV → BOUILLIE

FIG. 4

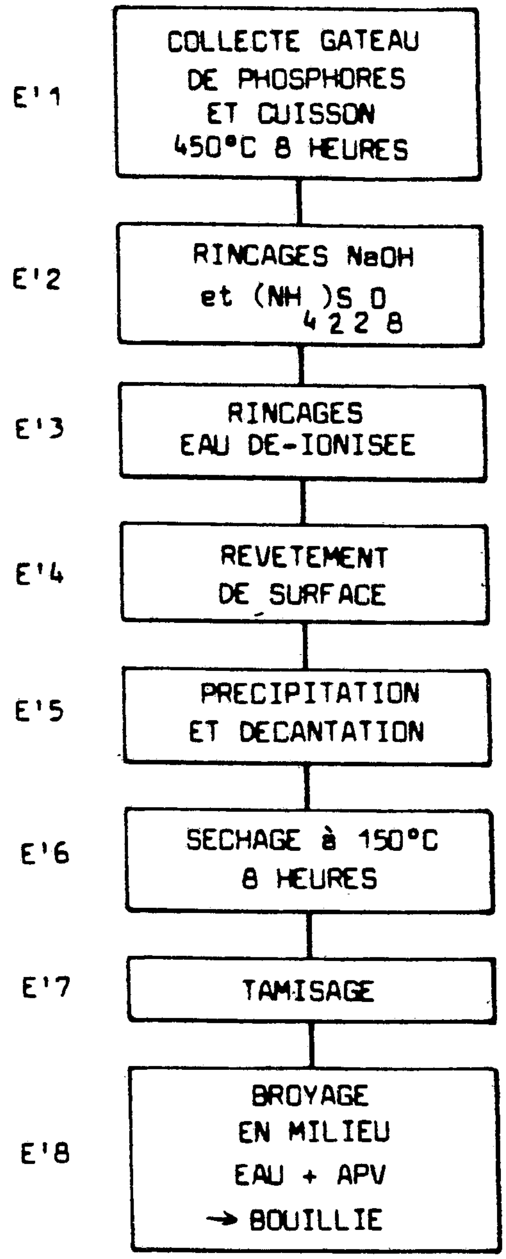
E'1
COLLECTE GATEAU DE PHOSPHORES ET CUISSON 450°C 8 HEURES
E'2
RINCAGES NaOH et $(NH_4)_2S_2O_8$
E'3
RINCAGES EAU DE-IONISEE
E'4
REVETEMENT DE SURFACE
E'5
PRECIPITATION ET DECANTATION
E'6
SECHAGE à 150°C 8 HEURES
E'7
TAMISAGE
E'8
BROYAGE EN MILIEU EAU + APV → BOUILLIE

FIG. 5

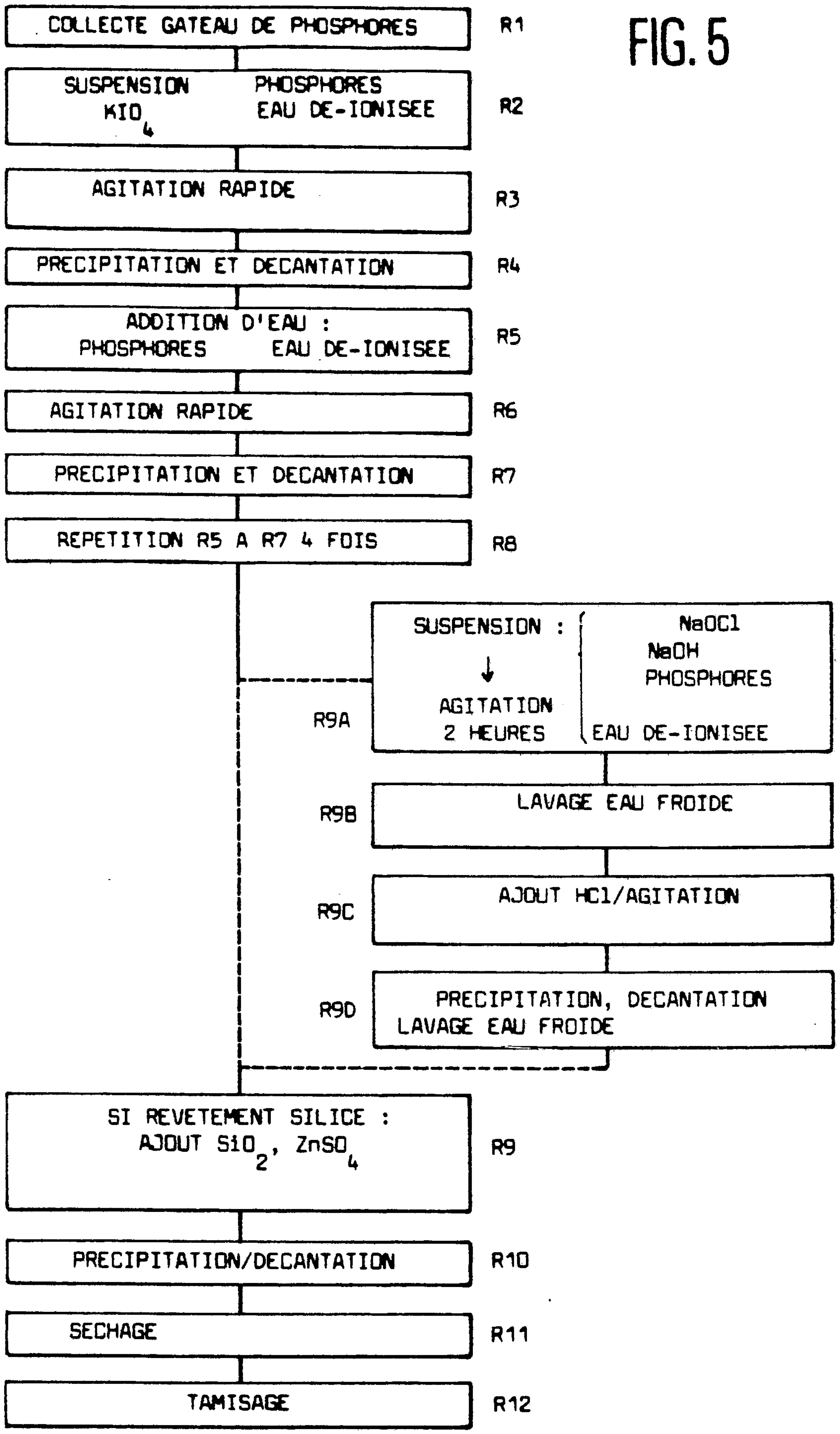
COLLECTE GATEAU DE PHOSPHORES
R1
SUSPENSION KIO4
PHOSPHORES EAU DE-IONISEE
R2
AGITATION RAPIDE
R3
PRECIPITATION ET DECANTATION
R4
ADDITION D'EAU : PHOSPHORES EAU DE-IONISEE
R5
AGITATION RAPIDE
R6
PRECIPITATION ET DECANTATION
R7
REPETITION R5 A R7 4 FOIS
R8
SUSPENSION :
AGITATION 2 HEURES
NaOCl
NaOH
PHOSPHORES
EAU DE-IONISEE
R9A
LAVAGE EAU FROIDE
R9B
AJOUT HCl/AGITATION
R9C
PRECIPITATION, DECANTATION
LAVAGE EAU FROIDE
R9D
SI REVETEMENT SILICE :
AJOUT SiO2, ZnSO4
R9
PRECIPITATION/DECANTATION
R10
SECHAGE
R11
TAMISAGE
R12

FIG. 6

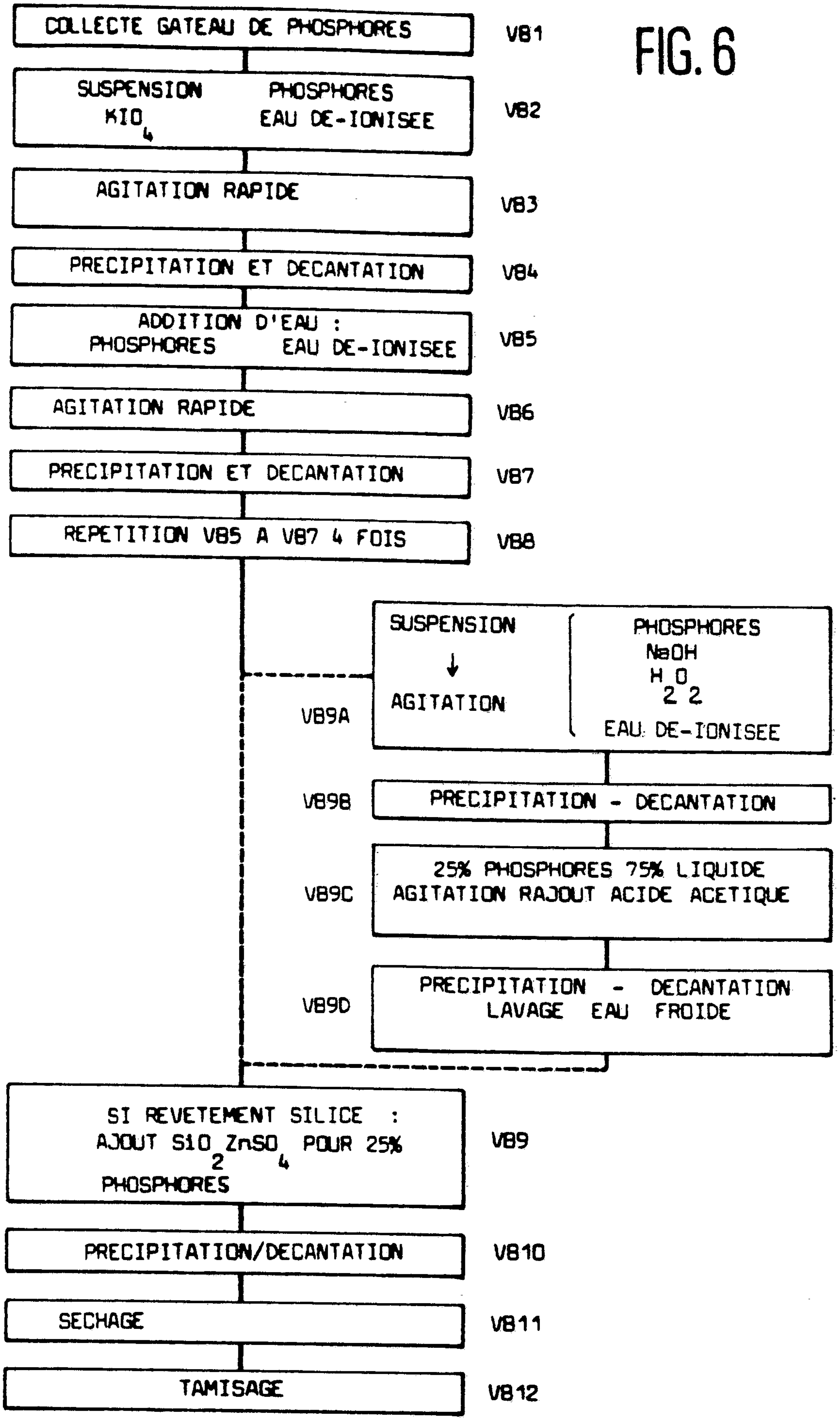
COLLECTE GATEAU DE PHOSPHORES
VB1
SUSPENSION KIO4 PHOSPHORES EAU DE-IONISEE
VB2
AGITATION RAPIDE
VB3
PRECIPITATION ET DECANTATION
VB4
ADDITION D'EAU : PHOSPHORES EAU DE-IONISEE
VB5
AGITATION RAPIDE
VB6
PRECIPITATION ET DECANTATION
VB7
REPETITION VB5 A VB7 4 FOIS
VB8
SUSPENSION
AGITATION
PHOSPHORES
NaOH
H2O2
EAU DE-IONISEE
VB9A
PRECIPITATION - DECANTATION
VB9B
25% PHOSPHORES 75% LIQUIDE
AGITATION RAJOUT ACIDE ACETIQUE
VB9C
PRECIPITATION - DECANTATION
LAVAGE EAU FROIDE
VB9D
SI REVETEMENT SILICE : AJOUT SiO2 ZnSO4 POUR 25% PHOSPHORES
VB9
PRECIPITATION/DECANTATION
VB10
SECHAGE
VB11
TAMISAGE
VB12

Office européen des brevets

# RAPPORT DE RECHERCHE EUROPEENNE

Numero de la demande

EP 89 40 1127

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DERWENT, no. 77-00683y, Derwent Publications Ltd, Londres, GB; & JP-A-51 131 486 (MITSUBISHI ELECTRIC CORP.) 16-11-1976<br>* Résumé *<br>--- | 1-4 | C 09 K 11/01 |
| X | US-A-3 625 659 (M.J. HAMMOND)<br>* En entier *<br>----- | 1-3 | |
| | | | DOMAINES TECHNIQUES RECHERCHES (Int. Cl.4) |
| | | | C 09 K 11/00 |

Le présent rapport a été établi pour toutes les revendications

| Lieu de la recherche | Date d'achèvement de la recherche | Examinateur |
|---|---|---|
| LA HAYE | 01-08-1989 | DROUOT M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)